# EUROPEAN PATENT SPECIFICATION

(11) **EP 1 559 243 B1**
(45) Date of publication and mention of the grant of the patent: **20.12.2006**
(21) Application number: 03751151.6
(22) Date of filing: 20.10.2003
(51) Int. Cl.: H04L 12/28

(54) **Optimisation of paquets transfer between two access points in a handover**
Optimierung einer Packetübertragung zwischen zwei Access Points bei einer Handover
Optimisation du transfert de paquets entre deux stations de base lors d'un handover

(30) Priority: 28.10.2002 US 281847
(43) Date of publication of application: 03.08.2005
(73) Proprietor: Koninklijke Philips Electronics N.V., 5621 BA Eindhoven (NL)
(72) Inventor: ZHONG, Zhun, Briarcliff Manor, NY 10510-8001 (US); PORTOLES, Marc, Briarcliff Manor, NY 10510-8001 (US); CHOI, Sunghyun, Briarcliff Manor, NY 10510-8001 (US)
(74) Representative: Eleveld, Koop Jan
(86) International application number: PCT/IB2003/004621
(87) International publication number: WO 2004/039007

(56) References cited:
- EP-A- 0 777 396
- WO-A-01/30090
- WO-A-98/47302
- PERKINS C E ET AL: "Optimized smooth handoffs in Mobile IP" PROCEEDINGS IEEE INTERNATIONAL SYMPOSIUM ON COMPUTERS AND COMMUNICATIONS, XX, XX, 6 July 1999 (1999-07-06), pages 340-346, XP002902009

## Description

### BACKGROUND OF THE INVENTION

### 1. Field of the Invention

The present invention relates to communications systems. More particularly, the present invention relates to a system and method for reducing data packet loss during handoff in an IEEE 802.11 wireless local area network (WLAN). Most particularly, the present invention relates to reducing data packet loss during handoff in a WLAN by one of modifying card firmware to send the contents of the card's queue back to a higher layer upon request, or mirroring the queue in the card in the WLAN interface driver so that an old Access Point (AP) can forward unsent data packets to a new AP during handoff.

### 2. Description of the Related Art

In a typical wireless communication system, such as IEEE 802.11 WLAN, the mobile station connect to the network via the Access Point (AP). Each AP covers a certain area and serves the mobile stations within that area. Before any data communication occur between a mobile station and an AP, the mobile station need to first associate with the AP. When the link between the mobile station and the AP becomes bad, it may become necessary for the mobile station to re-associate with a new AP with a better link quality to handle the two-way communication. The bad link may occur due to the distance moved or because of some other interference with communication. The process by which the mobile station terminates the communication with the old AP and re-associates with a new AP is termed "handoff".

Handoff requires a finite amount of time for the mobile station and a new AP to accomplish the operations necessary for locating and authenticating the new AP before the new AP can begin serving the mobile station. Meanwhile, before handoff is completed, packets addressed to the mobile station may keep arriving at the old AP which can no longer reach the mobile station, since the mobile station has terminated communication with the old AP. During this handoff period there is no way for the old AP to forward any packets that have arrived at the old AP to the mobile station. For User Datagram Protocol (UDP), the packets arriving at the old AP during handoff are dropped and the mobile station experiences data loss. For Transmission Control Protocol (TCP), these packets are retransmitted by the sender after the handoff but the retransmission has an impact on network throughput.

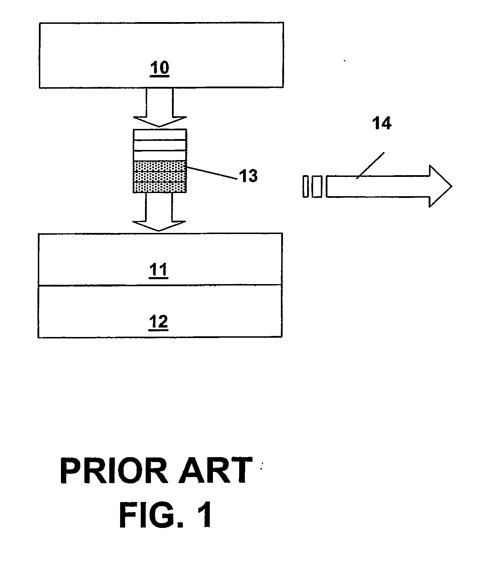

One approach to reducing packet loss captures packets arriving at the old AP in a buffer during handoff. Then, once the mobile station re-associates with a new AP, the new AP fetches the buffered packets from the old AP and forwards them to the mobile station. In one present state of the art system, as illustrated in FIG. 1, a buffer 13 is located between the network layer 10 and the wireless interface driver 11 to hold the packets which arrive at the old AP during handoff. The state-of-the-art system of FIG. 1 helps reduce the number of dropped packets during handoff by buffering packets that cannot be accepted by the wireless interface driver 11. The underlying assumption on which this approach is founded is that every packet accepted by the wireless interface driver 11 is delivered to the mobile station. This assumption is valid only if the network interface card 12 immediately delivers to the mobile station any packet forwarded to it by the wireless interface driver 11. The fact remains, however, that almost all network interface cards 12 have built-in queues capable of holding several packets. And therefore, given this queuing of packets by a wireless interface card 12, there is no guarantee that the delivery of a packet to the wireless interface card 12 by the wireless interface driver 11 necessarily results in the delivery of the packet by the wireless interface card 12 over the wireless medium to the mobile station.

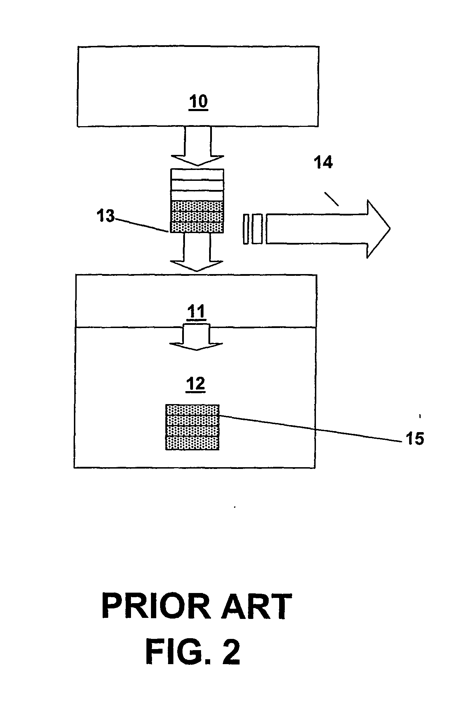

Further, since the buffer 13 in the prior art system of FIG. 1 is placed before the wireless interface driver 11, it only holds packets that have not been sent to the wireless interface driver 11. The state-of-the-art system of FIG. 1 does not have any way to recover those packets already sent by the wireless interface driver 11 to the wireless interface card 12 that could not be delivered by the wireless interface card 12 to the mobile station during handoff. FIG. 2 illustrates a wireless interface card 12 having a queue 14 containing packets that could not be delivered by the wireless interface card 12 during handoff and which cannot be recovered for subsequent delivery to the mobile station.

EP 0 777 396 describes a wireless data transmission system having multiple base stations. Data transfer during handover of a mobile unit from an old base station to a new base station is described. Packets are maintained in a FIFO buffer in an old station. At handover, the old station transmits the cells that were still undelivered and in the FIFO buffer, to the new base station 50, as shown in Figure 5 of EP 0 777 396.

### SUMMARY OF THE INVENTION

The problem with respect to the transmission system of EP 0 777 396 may be to provide, in a layered transmission structure, a system of transfer of undelivered packets at handover without affecting the layer that maintains the queue.

According to the invention, a method of reducing packet drop during IEEE 802.11 handoff is defined in claim 1, and an access point device for use in a wireless local area network is defined in claim 4.

The present invention is a novel method and system for reducing data packet loss during handoff in a wireless communication system and any impact of retransmission of network throughput.
The method and system of the present invention accomplishes this by recovering the packets already in the wireless interface card queue that have not yet been delivered to the mobile station.

In one preferred embodiment of the present invention, the card firmware is modified so that the packets held in the card queue can be fetched by a higher protocol layer in the old AP for forwarding to the new AP.

In an alternative preferred embodiment of the present invention, the card queue is mirrored in an image queue by the wireless interface driver and the wireless interface card reports delivery of each packet to the wireless interface driver so that the driver can delete the packet from its image queue.

### BRIEF DESCRIPTION OF THE DRAWINGS

FIG. 1 illustrates prior art buffering of packets above the wireless interface driver during handoff.
FIG. 2 illustrates prior art queuing of packets by a wireless interface card.

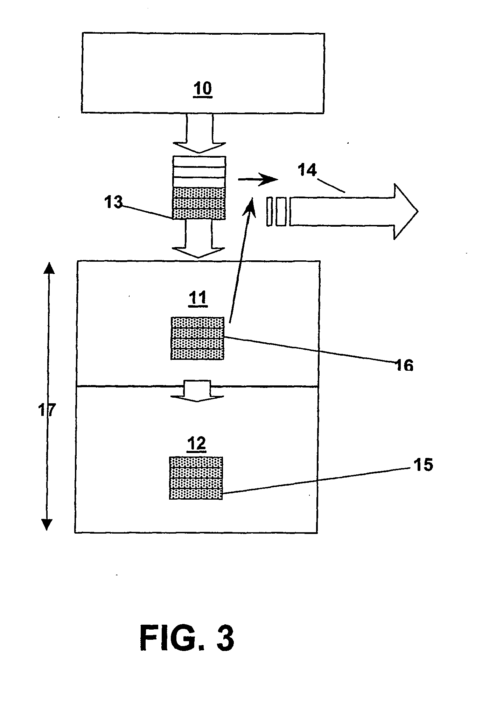

FIG. 3 illustrates a mirror image queue maintained by the wireless interface driver of the wireless interface card queue.

### DETAILED DESCRIPTION OF THE INVENTION

The present invention is a method and system for reducing and potentially eliminating the number of packets dropped during handoff by an old AP to a new AP in a WLAN and thereby reducing the impact of retransmission on network throughput. With the present invention, once a mobile station has successfully re-associated with a new AP, the new AP can fetch those packets which arrived at the old AP during handoff, are currently in the wireless interface card queue, and forward them to the mobile station. The method and system of the present invention thus reduces both total packet drop and retransmission impact on network throughput by enabling direct recovery of packets received during handoff from the old AP.

In a preferred embodiment, a change is made to the firmware of the wireless interface card 12 so that packets held in the card's queue of packets 14 can be sent back to a higher protocol layer upon request. In this embodiment, a higher protocol layer in the old AP is able to fetch packets in the wireless interface card queue 15 and forward them to the new AP 14 during handoff. Note that this embodiment requires changing the firmware in the wireless interface card, which must be done by the card vendor.

An alternative preferred embodiment does not rely on changing the firmware of the wireless interface card. In this alternative embodiment, a mirror image queue 16 is added to the wireless interface driver 11 to mirror the queue 15 in the wireless interface card 12. In this alternative, for every packet sent to the wireless interface card 12 by the wireless interface driver 11, the driver 11 keeps a copy in a mirror image queue16. Whenever a packet is received by the mobile station from the wireless interface card 12, the card 12 reports, i.e., acknowledges delivery, to the driver 11 and the driver deletes the packet from its mirror image queue 16. That is, the mirror image queue contains packets which have not been acknowledged as delivered by the mobile station either because they have not yet been sent to the station or because the station has not reported their receipt, i.e., acknowledged their delivery. By this means, the wireless interface driver 11 is able to independently maintain the status of the queue 15 in the wireless interface card 12 by retaining copies of the packets sent to the wireless interface card and not reported as delivered in a mirror image queue 16, i.e., a mirror image queue 16 of packets currently in the wireless interface card queue 15 awaiting delivery to the mobile station. Once the new AP asks for buffered packets, the old AP will forward not only those packets held in the buffer 13 above the wireless interface driver 11, but also the packets held in the wireless interface driver image queue 16, as none of these latter packets have been delivered to the mobile station.

However, in this alternative embodiment, care must be taken to avoid possible duplicate packets being delivered to the mobile station. Duplication may occur for the first packet in the wireless interface driver queue 16. During handoff it is likely that the wireless interface card has delivered the first packet in its queue 15 to the mobile station but has not received and acknowledgement (ACK) from the station because the station moves out of range or from some other environmental factor. In this case, the wireless interface card 12 does not signal the driver 11 that a delivery of the first packet has taken place. As a result, the wireless interface driver 11 keeps the first packet at the head of the image queue 16. After the mobile station re-associates with the new AP, the packet is forwarded to the new AP, which forwards it to the mobile station. As the station has received the packet before the handoff from the old AP, there is duplicate delivery of the packet. Therefore, to avoid such duplication, in this alternative preferred embodiment the first packet is discarded from the image queue 16 of the wireless interface driver 11 when forwarding packets to the new AP.

It should be noted that modifications and variations to the preferred embodiments presented above can be made by persons skilled in the art without departing from the scope of the present invention. The foregoing description of the preferred embodiments of the present invention have been presented as illustrative and not in any limiting sense and the scope of the present invention is to be limited solely by the scope of the following claims.

## Claims

1. A method of reducing packet drop during IEEE 802.11 handoff of a mobile station from a first to a second access point AP of a plurality of APs connected to each other in a wireless local area network WLAN, each of said plurality of APs comprising a layered data transport architecture having a lowest physical layer and a least one higher protocol layer that includes a network layer (10) for receiving a packet from the network and forwarding said packet to said lowest physical layer of said data transport architecture for delivery of said packets to the mobile station, said method comprising the steps of:
a) recovering a packet held in a first queue of undelivered packets in the first AP;
b) forwarding the recovered packet to the second AP; and
c) repeating steps a) and b) for each packet stored in the first queue of the first AP,
**characterized in that**
said lowest layer comprises a wireless interface driver (11) connected to a wireless interface card (12), and the method comprises:
c1) maintaining the first queue (16) in the wireless interface driver (11) and a second queue (15) of undelivered packets in the wireless interface card (12);
d) mirroring the second queue (15) of undelivered packets in the wireless interface card (12) to the first queue (16) in the wireless interface driver (11);
e) reporting to the wireless interface driver (11) the delivery of a packet from the second queue (16) to the mobile station;
f) deleting the reported packet from the first queue (16) in the wireless interface driver (11); whereby in steps a) and c) the first queue (16) is a mirror image queue (16) of undelivered packets of said first AP.

2. The method of claim 1, wherein said recovering step a) further comprises providing said packet to said at least one higher protocol layer said forwarding step b) further comprises forwarding (14) the provided packet to the second AP by said at least one higher protocol layer of said first AP.

3. The method of claim 1, wherein the step of recovering a packet held in the mirror image queue (16) further comprises the step of ignoring a first packet in said mirror image queue (16) such that duplicate delivery of said first packet is avoided.

4. An access point device AP for use in a wireless local area network WLAN the device having a standard layered data transport mechanism including a wireless interface for delivery of a packet received from said WLAN to a mobile station, and at least one higher layer for handoff of the mobile station from the device to a second AP for delivery of said packets to the mobile station, the wireless interface being arranged for:
a) recovering a packet held in a first queue (16) of undelivered packets in the device;
b) forwarding the recovered packet to the second AP; and
c) repeating steps a) and b) for each packet stored in the first queue (16) of the device,
**characterized in that**
the wireless interface comprises a wireless interface driver (11) connected to a wireless interface card (12), the wireless interface driver (11) being arranged for:
c0) maintaining the first queue (16) of undelivered packets, and the wireless interface card (12) being arranged for
c1) maintaining a second queue (15) of undelivered packets in the wireless interface card (12), and
e) reporting to the wireless interface driver (11) the delivery of a packet from the second queue (15) to the mobile station; and
**in that** the wireless interface driver (11) is arranged for:
d) mirroring the second queue (15) of undelivered packets in the wireless interface card (12) to the first queue (16) in the wireless interface driver (11),
f) deleting the reported packet from the first queue (16) in the wireless interface driver (11); whereby in a) and c) the first queue (16) is a mirror image queue of undelivered packets of said first AP.

5. The device of claim 4, wherein the wireless interface driver (11) is further arranged for, in said recovering a), providing said packet to said at least one higher protocol layer for, in said forwarding b), forwarding the provided packet to the second AP by said at least one higher protocol layer.

6. The device of claim 4, wherein the wireless interface driver (11) is further arranged for, in said recovering a packet held in the mirror image queue (16), ignoring a first packet in said mirror image queue (16) such that duplicate delivery of said first packet is avoided.

## Patentansprüche

1. Verfahren zum Reduzieren des Paketverlusts während eines Handoffs gemäß IEEE 802.11 einer Mobilstation von einem ersten an einen zweiten Access Point AP von einer Vielzahl von APs, die in einem Wireless Local Area Network WLAN miteinander verbunden sind, wobei jeder AP aus der Vielzahl von APs eine geschichtete Datentransportarchitektur mit einer untersten physikalischen Schicht und mindestens einer höheren Protokollschicht umfasst, die eine Netzwerkschicht (10) zum Empfangen eines Paket von dem Netzwerk und zum Weiterleiten des genannten Pakets an die genannte unterste physikalische Schicht der genannten Datentransportarchitektur zur Zustellung der genannten Pakete an die Mobilstation enthält, wobei das genannte Verfahren die folgenden Schritte umfasst:
a) Zurückgewinnen eines Pakets, das in einer ersten Warteschlange von nicht zugestellten Paketen in dem ersten AP gehalten wird;
b) Weiterleiten des zurück gewonnenen Pakets an den zweiten AP; und
c) Wiederholen der Schritte a) und b) für jedes in der ersten Warteschlange des ersten AP gespeicherte Paket,
**dadurch gekennzeichnet, dass**
die genannte unterste Schicht einen Wireless-Schnittstellentreiber (11) umfasst, der mit einer Wireless-Schnittstellenkarte (12) verbunden ist, und das Verfahren Folgendes umfasst:
c1) Verwalten der ersten Warteschlange (16) in dem Wireless-Schnittstellentreiber (11) und einer zweiten Warteschlange (15) von nicht zugestellten Paketen in der Wireless-Schnittstellenkarte (12);
d) Spiegeln der zweiten Warteschlange (15) von nicht zugestellten Paketen in der Wireless-Schnittstellenkarte (12) auf die erste Warteschlange (16) in dem Wireless-Schnittstellentreiber (11);
e) Informieren des Wireless-Schnittstellentreibers (11) über die Zustellung eines Pakets aus der zweiten Warteschlange (16) an die Mobilstation;
f) Löschen des als zugestellt gemeldeten Pakets aus der ersten Warteschlange (16) in dem Wireless-Schnittstellentreiber (11), wobei in den Schritten a) und c) die erste Warteschlange (16) eine Spiegelbildwarteschlange (16) von nicht zugestellten Paketen des genannten ersten AP ist.

2. Verfahren nach Anspruch 1, wobei der genannte Schritt des Zurückgewinnens a) weiterhin das Liefern des genannten Pakets an die genannte mindestens eine höhere Protokollschicht umfasst und der genannte Schritt des Weiterleitens b) weiterhin das Weiterleiten (14) des gelieferten Pakets an den zweiten AP durch die genannte mindestens eine höhere Protokollschicht des genannten ersten AP umfasst.

3. Verfahren nach Anspruch 1, wobei der Schritt des Zurückgewinnens eines in der Spiegelbildwarteschlange (16) gehaltenen Pakets weiterhin den Schritt des Ignorierens eines ersten Pakets in der genannten Spiegelbildwarteschlange (16) umfasst, so dass eine doppelte Zustellung des genannten ersten Pakets vermieden wird.

4. Access-Point-Vorrichtung AP zur Verwendung in einem Wireless Local Area Network WLAN, wobei die Vorrichtung über einen standardmäßigen geschichteten Datentransportmechanismus verfügt, welcher eine Wireless-Schnittstelle für die Zustellung eines von dem genannten WLAN empfangenen Pakets an eine Mobilstation und mindstens eine höhere Schicht für das Handoff der Mobilstation von der Vorrichtung an einen zweiten AP zur Zustellung der genannten Pakete an die Mobilstation enthält, wobei die Wireless-Schnittstelle dafür eingerichtet ist,
a) ein Paket, das in einer ersten Warteschlange von nicht zugestellten Paketen in der Vorrichtung gehalten wird, zurück zu gewinnen;
b) das zurück gewonnene Paket an den zweiten AP weiterzuleiten; und
c) die Schritte a) und b) für jedes in der ersten Warteschlange (16) der Vorrichtung gespeicherte Paket zu wiederholen,
**dadurch gekennzeichnet, dass**
die Wireless-Schnittstelle einen Wireless-Schnittstellentreiber (11) umfasst, der mit einer Wireless-Schnittstellenkarte (12) verbunden ist, und der Wireless-Schnittstellentreiber dafür eingerichtet ist,
c0) die erste Warteschlange (16) von nicht zugestellten Paketen zu verwalten, und die Wireless-Schnittstellenkarte (12) dafür eingerichtet ist,
c1) eine zweite Warteschlange (15) von nicht zugestellten Paketen in der Wireless-Schnittstellenkarte (12) zu verwalten; und
d) die zweite Warteschlange (15) von nicht zugestellten Paketen in der Wireless-Schnittstellenkarte (12) auf die erste Warteschlange (16) in dem Wireless-Schnittstellentreiber (11) zu spiegeln;
e) den Wireless-Schnittstellentreibers (11) über die Zustellung eines Pakets aus der zweiten Warteschlange (16) an die Mobilstation zu informieren; und **dadurch**, dass der Wireless-Schnittstellentreiber (11) dafür eingerichtet ist,
f) das als zugestellt gemeldete Paket aus der ersten Warteschlange (16) in dem Wireless-Schnittstellentreiber (11) zu löschen, wobei in den Schritten a) und c) die erste Warteschlange (16) eine Spiegelbildwarteschlange (16) von nicht zugestellten Paketen des genannten ersten AP ist.

5. Vorrichtung nach Anspruch 4, wobei der Wireless-Schnittstellentreiber (11) weiterhin dafür eingerichtet ist, bei dem genannten Schritt des Zurückgewinnens a) das genannte Paket an die genannte mindestens eine höhere Protokollschicht zu liefern, um in dem genannten Schritt des Weiterleitens b) das gelieferte Paket an den zweiten AP durch die genannte mindestens eine höhere Protokollschicht weiterzuleiten.

6. Vorrichtung nach Anspruch 4, wobei der Wireless-Schnittstellentreiber (11) weiterhin dafür eingerichtet ist, bei dem genannten Zurückgewinnen eines in der Spiegelbildwarteschlange (16) gehaltenen Pakets ein erstes Paket in der genannten Spiegelbildwarteschlange (16) zu ignorieren, so dass eine doppelte Zustellung des genannten ersten Pakets vermieden wird.

## Revendications

1. Procédé de réduction des abandons de paquets pendant un transfert intracellulaire IEEE 802.11 d'une station mobile à partir d'un premier à un deuxième point d'accès AP de plusieurs AP connectés les uns aux autres dans un réseau local sans fil WLAN, chacun desdits plusieurs AP comprenant une architecture de transport de données en couches ayant une couche physique la plus basse et au moins une couche de protocole supérieure qui inclut une couche de réseau (10) pour recevoir un paquet du réseau et transférer ledit paquet à ladite couche physique la plus basse de ladite architecture de transport de données pour fournir lesdits paquets à la station mobile, ledit procédé comprenant les étapes suivantes:
a) récupération d'un paquet maintenu dans une première file de paquets non délivrés dans le premier AP;
b) transfert du paquet récupéré au deuxième AP; et
c) répétition des étapes a) et b) pour chaque paquet stocké dans la première file du premier AP,
**caractérisé en ce que**
ladite couche la plus basse comprend un pilote d'interface sans fil (11) connecté à une carte d'interface sans fil (12), et le procédé comprend:
c1) le maintien de la première file (16) dans le pilote d'interface sans fil (11) et d'une deuxième file (15) de paquets non délivrés dans la carte d'interface sans fil (12);
d) la copie en miroir de la deuxième file (15) de paquets non délivrés dans la carte d'interface sans fil (12) à la première file (16) dans le pilote d'interface sans fil (11);
e) la fourniture au pilote d'interface sans fil (11) d'un rapport de fourniture d'un paquet à partir de la deuxième file (15) à la station mobile;
f) l'effacement du paquet dont on a fourni un rapport à partir de la première file (16) dans le pilote d'interface sans fil (11); par lequel aux étapes a) et c) la première file (16) est une file image de copie en miroir (16) de paquets non fournis dudit premier AP.

2. Procédé selon la revendication 1, dans lequel ladite étape de récupération a) comprend de plus la fourniture dudit paquet à ladite au moins une couche de protocole supérieure, ladite étape de transfert b) comprenant de plus le transfert (14) du paquet fourni au deuxième AP par ladite au moins une couche de protocole supérieure dudit premier AP.

3. Procédé selon la revendication 1, dans lequel l'étape de récupération d'un paquet maintenu dans la file image de copie en miroir (16) comprend de plus l'étape d'ignorer un premier paquet dans ladite file image de copie en miroir (16) de façon à éviter la fourniture dupliquée dudit premier paquet.

4. Dispositif de point d'accès AP pour utilisation dans un réseau local sans fil WLAN, le dispositif ayant un mécanisme de transport de données en couche standard incluant une interface sans fil pour fournir un paquet reçu dudit WLAN à une station mobile, et au moins une couche supérieure pour le transfert intracellulaire de la station mobile à partir du dispositif à un deuxième AP pour fourniture desdits paquets à la station mobile, l'interface sans fil étant aménagée pour:
a) récupérer un paquet maintenu dans la première file (16) de paquets non délivrés dans le dispositif;
b) transférer le paquet récupéré au deuxième AP; et
c) répéter les étapes a) et b) pour chaque paquet stocké dans la première file (16) du dispositif,
**caractérisé en ce que**
l'interface sans fil comprend un pilote d'interface sans fil (11) connecté à une carte d'interface sans fil (12), le pilote d'interface sans fil (11) étant aménagé pour:
c0) maintenir la première file (16) de paquets non délivrés, et la carte d'interface sans fil (12) étant aménagée pour
c1) maintenir une deuxième file (15) de paquets non délivrés dans la carte d'interface sans fil (12), et
e) fournir au pilote d'interface sans fil (11) un rapport de fourniture d'un paquet à partir de la deuxième file (15) à la station mobile; et **en ce que** le pilote d'interface sans fil (11) est aménagé pour:
d) copier en miroir la deuxième file (15) de paquets non délivrés dans la carte d'interface sans fil (12) à la première file (16) dans le pilote d'interface sans fil (11);
f) effacer le paquet dont on a fourni un rapport à partir de la première file (16) dans le pilote d'interface sans fil (11); par lequel, dans a) et c), la première file (16) est une file image de copie en miroir de paquets non fournis dudit premier AP.

5. Dispositif selon la revendication 4, dans lequel le pilote d'interface sans fil (11) est de plus aménagé pour, dans ladite récupération, a) fournir ledit paquet à ladite au moins une couche de protocole supérieure pour, dans ledit transfert, b) transférer le paquet fourni au deuxième AP par ladite au moins une couche de protocole supérieure.

6. Dispositif selon la revendication 4, dans lequel le pilote d'interface sans fil (11) est de plus aménagé pour, dans ladite récupération d'un paquet maintenu dans la file image de copie en miroir (16), ignorer un premier paquet dans ladite file image de copie en miroir (16) de manière à éviter la fourniture dupliquée dudit premier paquet.
